(19) Europäisches Patentamt
European Patent Office
Office européen des brevets

(11) EP 0 634 297 B1

(12) **FASCICULE DE BREVET EUROPEEN**

(45) Date de publication et mention de la délivrance du brevet:
**11.12.1996 Bulletin 1996/50**

(51) Int. Cl.[6]: **B60C 15/024**, B60C 15/05

(21) Numéro de dépôt: **94109297.5**

(22) Date de dépôt: **16.06.1994**

# (54) Structure de pneumatique pour vehicules poids-lourd

Reifen für LKW

Tire for heavy duty vehicles

(84) Etats contractants désignés:
**DE ES FR GB IT**

(30) Priorité: **12.07.1993 FR 9308662**

(43) Date de publication de la demande:
**18.01.1995 Bulletin 1995/03**

(73) Titulaire: **COMPAGNIE GENERALE DES ETABLISSEMENTS MICHELIN - MICHELIN & CIE**
**63040 Clermont-Ferrand Cédex (FR)**

(72) Inventeur: **Diernaz, Christian**
**F-63200 Riom (FR)**

(74) Mandataire: **Devaux, Edmond-Yves**
**Michelin & Cie**
**Service SRK. Brevets**
**23, Place des Carmes**
**63040 Clermont-Ferrand Cédex (FR)**

(56) Documents cités:

| | |
|---|---|
| EP-A- 0 129 675 | DE-A- 2 361 975 |
| DE-A- 3 141 877 | DE-B- 1 005 862 |
| FR-A- 323 165 | FR-A- 1 195 309 |
| US-A- 1 822 320 | US-A- 2 817 381 |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 634 297 B1

Printed by Rank Xerox (UK) Business Services
2.13.9/3.4

## Description

La présente invention concerne les pneumatiques pour véhicules poids-lourd tels que camions, autobus. Plus particulièrement, elle se rapporte aux bourrelets des neumatiques à carcasse radiale comportant au moins une tringle dans chaque bourrelet et destinés à être montés sur des jantes définies selon les normalisations en cours et comportant des rebords axialement à en cours et comportant des rebords axialement à l'extérieur. Un tel pneumatique est antériorisé, par exemple, par FR-A-1 195 309.

Dans certains cas, les pneumatiques pour véhicules poids-lourd sont amenés à supporter des surcharges importantes qui provoquent au niveau des flancs du pneumatique des flexions d'amplitudes d'autant plus importantes et donc pénalisantes que les surcharges sont élevées. Ce problème se rencontre aussi dans le cas de pneumatiques jumelés lorsque l'un des deux pneumatiques a subi une perte de pression par crevaison par exemple et où l'autre pneumatique, supportant la totalité de la charge, subit au niveau des flancs des flexions très pénalisantes vis-à-vis de l'endurance de l'armature de carcasse.

Enfin, il existe pour certains véhicules poids-lourd une demande de pneumatiques dont le diamètre hors tout est sensiblement réduit tout en conservant les profils et dimensions de jantes actuellement sur le marché afin d'augmenter le volume utile transporté; si H représente la hauteur du pneumatique monté sur sa jante, mesurée sur une section méridienne entre le point du bourrelet le plus près de l'axe de rotation et le point de la ceinture du pneumatique le plus à l'extérieur et S la largeur hors tout du pneumatique prise parallèlement à l'axe de rotation, le rapport de forme est défini par H/S.

Dans le cas de rapports de forme inférieurs ou égaux à 0.6, on constate une tenue médiocre à la fatigue du pneumatique sous les cycles imposés par le roulage; dans chaque flanc du pneumatique s'étendant entre un bourrelet et la ceinture du sommet, la partie correspondante de la carcasse radiale est réduite en hauteur et par voie de conséquence chaque câble de carcasse subit des cycles de flexion suivant des rayons de courbure faibles. En fonctionnement, ces câbles sont soumis à des cycles de variation de courbure à chaque tour de roue d'autant plus pénalisants que ce rapport de forme et donc ces rayons de courbure sont faibles.

On connaît différentes propositions visant à lutter contre la fatigue excessive de la carcasse dans le flanc d'un pneumatique au cours du roulage. Parmi celles-ci on peut citer le brevet français FR-A-1 502 689 de la demanderesse qui enseigne qu'en renforçant cette zone du pneumatique avec par exemple une couche de mélange de caoutchouc on confère au pneumatique un supplément de rigidité et on permet ainsi de diminuer l'amplitude des cycles de flexion; mais une telle disposition entraîne une augmentation de poids et surtout d' échauffement dans les flancs donc de consommation d'énergie.

Une autre alternative proposée par la demanderesse dans sa demande de brevet français FR-A-2 415 016 prévoit de réaliser une "dépression" dans le flanc du pneumatique permettant ainsi de réduire la hauteur du bourrelet et d'augmenter la hauteur de flanc et par conséquent d'augmenter la flexibilité du flanc. Cette solution permet effectivement d'augmenter l' endurance des flancs sous forte flexion mais de façon encore limitée en partie à cause du fait que la zone de bourrelet du pneumatique la plus à l'extérieur radialement est toujours contrainte de fléchir en suivant le profil du rebord de jante.

Notons que si ces deux propositions permettent d'augmenter sensiblement la tenue en endurance du flanc elles se révèlent encore insuffisantes dans le cas des pneumatiques de rapports de forme inférieurs ou égaux à 0.6.

L'objectif de la présente invention est la réalisation d'un pneumatique à carcasse radiale se montant sur une jante comportant des sièges de bourrelet prolongés radialement et axialement à l'extérieur par des rebords et dont les flancs dudit pneumatique présentent à l'état gonflé des rayons de courbure sensiblement plus grands que ceux obtenus sur un pneumatique de mêmes dimensions réalisé selon l'art antérieur.

Un autre objectif est d'obtenir par ce moyen une meilleure endurance sous les cycles d' écrasement occasionnés par le roulage et sous les surcharges statiques ou dynamiques.

L'objet de la présente invention est un pneumatique pour véhicules poids-lourd, destiné à être monté sur une jante J comportant deux sièges de bourrelets prolongés axialement et radialement vers l'extérieur par des rebords de rayon $R_J$, comportant dans chaque bourrelet B au moins une tringle 2 de rayon intérieur $R_T$ autour de laquelle est ancrée par retournement une armature de carcasse radiale,
caractérisé en ce que

a) le centre de gravité 21 de la section méridienne de la tringle 2 est situé radialement à l'extérieur du rebord de jante,
b) la tringle 2 a un module d'extension au moins égal à 100000 MPa et son serrage sur le rebord de jante $s = (R_J-R_B)/(R_T-R_B)$ est compris entre 0.1 et 0.9, $R_B$ étant le rayon du bourrelet du pneumatique non monté mesuré dans le plan perpendiculaire à l'axe de rotation et passant par le centre de gravité 21 de la section de la tringle 2.

Par positionné radialement à l'extérieur du rebord de jante il faut entendre que le centre de gravité 21 est situé à une distance de l'axe de rotation supérieure à $R_J$ et est positionné sur une droite perpendiculaire à l'axe de rotation passant entre le point K, point de jonction entre la génératrice du siège de la jante et le rebord de la jante, et le point L, point du rebord de jante le plus extérieur axialement.

Dans la présente invention, dans le cas du pneumatique monté sur sa jante gonflé à sa pression de fonctionnement et soumis à sa charge moyenne d'utilisation la composante axiale des efforts exercés par le bourrelet sur le rebord de jante résultant des effets de la pression de gonflage et des sollicitations latérales imposées au pneumatique en virage par exemple est équilibrée par des forces de frottement et des forces de coincement développées entre le bourrelet et le rebord de jante. Une adaptation de ces forces est réalisable en ajustant la valeur du serrage de la tringle 2 et la position de son centre de gravité 21 radialement à l'extérieur du rebord de jante et axialement par rapport à ce même rebord de jante.

Dans cette position de la tringle écartée à la fois radialement à l'extérieur et axialement à l'extérieur par rapport à la position traditionnelle, le rayon de courbure des renforts radiaux de la nappe carcasse se trouve augmenté : ce qui améliore la résistance à la fatigue desdits renforts.

Cet effet sur le rayon de courbure des flancs peut être encore amélioré si l'on prévoit de réaliser le retournement de la nappe carcasse autour de la tringle 2 radialement vers l'intérieur du pneumatique.

Un avantage de la présente invention est de pouvoir conserver les jantes actuellement disponibles et en particulier de conserver les mêmes diamètres de tambour de frein sur lesquels se monte l'ensemble pneumatique et jante.

La présente invention permet une éventuelle diminution du diamètre extérieur du pneumatique afin d'obtenir un pneumatique de rapport de forme inférieur ou égal à 0.6, avec une hauteur de section H faible tout en ayant des flancs dont les rayons de courbure sont suffisamment grands et en assurant un blocage convenable des bourrelets sur la jante.

Afin d'améliorer dans le temps la liaison du pneumatique sur sa jante compte tenu des phénomènes de fluage des mélanges caoutchoutiques situés radialement sous la tringle 2, il est avantageux de prolonger radialement vers l'intérieur la partie du bourrelet B, axialement à l'intérieur par rapport à la tringle 2, par un prolongement 5; ledit prolongement pouvant même venir au contact de la génératrice du siège de la jante.

Dans le but de maintenir, au cours du temps, un effort de contact entre la partie 5 du bourrelet B et le siège de jante, ce prolongement peut être renforcé par divers matériaux comme par exemple : des câbles textiles ou métalliques disposés annulairement ou au moins une tringle de section quelconque.

Pour s'assurer d'une tenue efficace du bourrelet sur la jante même sous l'effet de contraintes thermiques générées par l'échauffement des tambours de frein à la suite de freinages répétés il peut être avantageux, tout en renforçant la partie 5 du bourrelet B axialement et radialement à l'intérieur par rapport à la tringle 2, par exemple avec une tringle 3 de module au moins égal à 4000 Mpa, de disposer une ou plusieurs nappes de liaison entre la tringle 3 et la partie du bourrelet radialement à l'extérieur du rebord de jante.

Le rôle de cette nappe est d'éviter tout risque de déplacement axial vers l'extérieur de la partie du bourrelet radialement à l'extérieur du rebord de jante sous l'effet des contraintes thermiques et mécaniques.

Les fils ou câbles de chaque nappe de liaison sont orientés de façon à faire un angle compris entre - 45° et + 45° par rapport à l'orientation de l'armature de carcasse.

La description qui suit en regard du dessin annexé illustrant des modes de réalisation possibles, et donné à titre d'exemple, permettra une meilleure compréhension de la mise en oeuvre de l'invention. Sur ce dessin :

- la figure 1 est une vue de la demi-section transversale d'un pneumatique monté sur jante, conforme à l'invention, l'axe XX' est axe de symétrie de la figure;
- la figure 2 est une vue méridienne d'un mode de réalisation d'un bourrelet de pneumatique non monté sur jante, conforme à l'invention;
- la figure 3 est une variante de réalisation de l'invention dans laquelle la partie du bourrelet la plus axialement et radialement à l'intérieur comporte une tringle de renfort autour de laquelle est enroulée une nappe de liaison dont les extrémités sont situées de part et d'autre de la tringle située radialement à l'extérieur du rebord de jante;
- la figure 4 est une autre variante de réalisation de l'invention dans laquelle les deux extrémités d'une nappe de liaison sont disposées du même côté par rapport à la tringle située radialement à l'extérieur du rebord de jante.

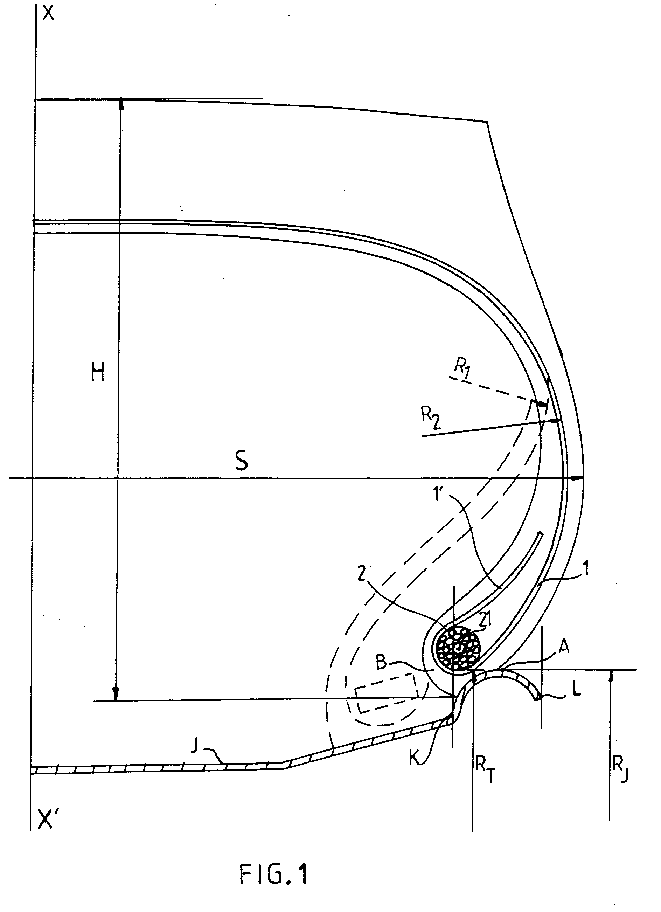

Sur la figure 1 est représentée en traits pleins la demi-section méridienne d'un pneumatique de dimension **295/50 R 22.5** réalisé selon l'invention, superposée à celle dessinée en pointillés d'un pneumatique de même dimension realisé selon une des possibilités de l'art antérieur, ces deux pneumatiques étant montés sur la même jante. Dans cet exemple, la jante de montage J comporte deux sièges de bourrelet dont les génératrices font un angle de 15° ± 1° avec une parallèle à l'axe de rotation, lesdits sièges se prolongeant radialement et axialement vers l'extérieur par des rebords en forme d'arc de cercle de rayon 12.7 mm; pour ladite jante de montage le rayon $R_J$ correspond à la distance radiale entre le point A du rebord le plus éloigné de l'axe de rotation et l'axe de rotation. Le point K est le point de raccordement entre le siège de jante et le rebord de jante et le point L est le point du rebord de jante le plus extérieur axialement.

Le pneumatique réalisé selon l'invention comporte une tringle 2 de type "tressée" de rayon intérieur $R_T$ dont le centre de gravité 21 de sa section est situé radialement par rapport à l'axe de rotation à une distance supérieure au rayon $R_J$ du rebord de jante et est positionné axialement sur une droite perpendiculaire à l'axe de rotation passant entre le point K et le point A du rebord de jante le plus extérieur radialement. Une armature de carcasse 1 en câbles métalliques composés de 12 fils de 18/100 est retournée axialement vers l'intérieur autour de la tringle 2 pour former le retournement 1', ceci permettant d'éviter la présence d'un point d'inflexion de l'armature de carcasse au dessus de la tringle 2 et ainsi d'augmenter la hauteur de flanc et par conséquent le rayon de courbure du flanc du pneumatique gonflé.

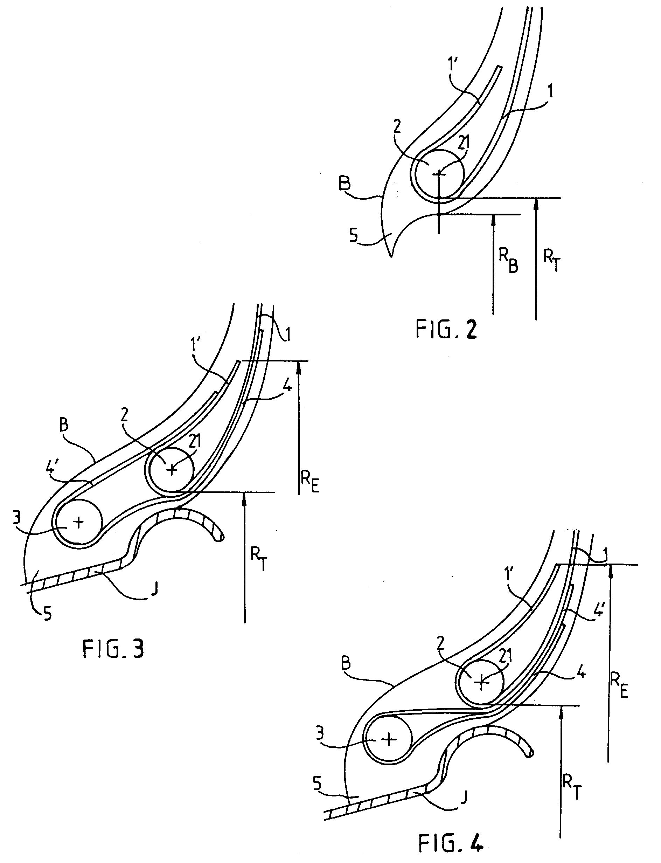

La tringle 2 de type "tressée" a un module d'extension égal à 150000 MPa et son serrage $s = (R_J - R_B)/(R_T - R_B)$ est égal à 0.3 afin d'assurer le blocage du bourrelet sur le rebord de jante, $R_B$ (voir figure 2) étant le rayon du bourrelet du pneumatique non monté sur jante mesuré dans le plan perpendiculaire à l'axe de rotation et passant par le centre de gravité de la section de la tringle 2

On constate que tout en ayant un pneumatique dont le rapport de forme H/S est dans ce cas égal à 0.5, on a pu conserver au flanc du pneumatique **295/50 R 22.5** un rayon moyen de courbure $R_2$ de l'armature de carcasse supérieur au rayon moyen $R_1$ mesuré sur le flanc du pneumatique construit avec un bourrelet selon l'art antérieur.

Sur la figure 2, on voit le bourrelet B d'un pneumatique, réalisé selon l'invention, non monté sur une jante : ce bourrelet comporte une nappe de carcasse 1 retournée axialement à l'intérieur autour d'une tringle de type "tressée" positionnée dans le bourrelet B de telle façon qu'une fois le pneumatique monté sur jante, le centre de gravité 21 de la section de la tringle 2 soit situé radialement à l'extérieur du rebord de jante et axialement entre les deux droites passant par les points K et A perpendiculairement à l'axe de rotation.Ledit bourrelet comporte aussi une partie 5 en mélange de caoutchouc axialement à l'intérieur par rapport à la tringle 2 et prolongeant le bourrelet B radialement vers l'axe de rotation et en contact avec une partie du rebord de jante.

La figure 3 présente une variante de l'invention dans laquelle le bourrelet B est prolongé radialement vers l'axe de rotation par une partie 5 axialement et radialement à l'intérieur par rapport à la tringle 2 elle-même positionnée radialement à l'extérieur du rebord de jante J; ladite partie 5 vient en contact avec le siège de la jante J et est renforcée par une tringle de type "tressée" 3 de module égal à 100000 Mpa. Autour de cette tringle 3 est enroulée une nappe de liaison composée de fils textiles dont les retournements 4 et 4' viennent recouvrir de part et d'autre respectivement l'armature de carcasse 1 et son retournement 1'. L'extrémité du retournement 4' est située à une distance à l'axe de rotation supérieure au rayon intérieur $R_T$ de la tringle 2 et inférieure au rayon $R_E$ de l'extrémité du retournement 1' de l'armature de carcasse; l'extrémité du retournement 4 est située à une distance à l'axe de rotation supérieure au rayon de l'extrémité du retournement 1' de l'armature de carcasse. Les fils de cette nappe de liaison sont disposés radialement.

La figure 4 présente un autre bourrelet de pneumatique réalisé selon l'invention et monté sur une jante J dans lequel la partie 5 du bourrelet B axialement et radialement à l'intérieur par rapport à la tringle 2 est prolongée jusqu'à venir en contact avec le siège de la jante J et comporte une tringle de type "tressée" 3 de module égal à 100000 Mpa autour de laquelle est enroulée une nappe de liaison en fils textiles disposés radialement et dont les retournements 4 et 4' sont en partie superposés et sont situés tous les deux du côté axialement extérieur à l'armature de carcasse. Les extrémités des retournements de la nappe de liaison sont situées par rapport à l'axe de rotation à des distances supérieures au rayon intérieur $R_T$ de la tringle 2 et inférieures au rayon $R_E$ de l'extrémité du retournement 1' de l'armature de carcasse. Afin d'éviter une discontinuité de raideur en flexion de la zone du bourrelet située radialement à l'extérieur de la tringle 2 les extrémités des retournements de la nappe de liaison sont étagées avec un décalage minimal de 10mm entre leurs rayons respectifs.

Il faut noter que dans les variantes de structure de bourrelet de pneumatique représentées par les figures 3 et 4 l'évolution du serrage sur le rebord en fonction du temps est mieux maîtrisée par le fait qu'une partie des mélanges caoutchoutiques est remplacée par au moins une nappe en matériau ne fluant pas.

**Revendications**

1. Pneumatique, pour véhicules poids-lourd, destiné à être monté sur une jante (J) comportant deux sièges de bourrelets prolongés axialement et radialement vers l'extérieur par des rebords de rayon $R_J$, comportant dans chaque bourrelet (B) au moins une tringle (2) de rayon intérieur $R_T$ autour de laquelle est ancrée par retournement une armature de carcasse radiale (1), caractérisé en ce que

   a) le centre de gravité (21) de la section méridienne de la tringle (2) est situé radialement à l'extérieur du rebord de jante,
   b) la tringle (2) a un module d'extension au moins égal à 100000 MPa et son serrage sur le rebord de jante $s = (R_J - R_B)/(R_T - R_B)$ est compris entre 0.1 et 0.9, $R_B$ étant le rayon du bourrelet du pneumatique non monté mesuré dans le plan perpendiculaire à l'axe de rotation et passant par le centre de gravité (21) de la section de la tringle (2).

2. Pneumatique selon la revendication 1, caractérisé en ce que l'armature de carcasse (1) est retournée axialement vers l'intérieur autour de la tringle (2).

3. Pneumatique selon la revendication 2, caractérisé en ce que la tringle (2) a le centre de gravité (21) de sa section positionné axialement à l'intérieur par rapport au point A du rebord de jante le plus éloigné radialement de l'axe de rotation.

4. Pneumatique selon la revendication 3, caractérisé en ce que la partie (5) du bourrelet (B) axialement à l'intérieur par rapport à la tringle (2) est prolongée radialement vers l'axe de rotation pour pouvoir venir en contact avec une partie du rebord de la jante (J).

5. Pneumatique selon l'une des revendications 1 à 4, caractérisé en ce que la partie (5) du bourrelet (B) axialement à l'intérieur par rapport à la tringle (2) est prolongée radialement jusqu'à pouvoir venir en contact avec le siège de la jante (J).

6. Pneumatique selon la revendication 5, caractérisé en ce que la partie (5) du bourrelet (B) axialement et radialement à l'intérieur par rapport à la tringle (2) comporte un élément de renfort (3) dont le module d'extension est au moins égal à 4000 MPa.

7. Pneumatique selon la revendication 6, caractérisé en ce que l'élément de renfort (3) est une tringle de section circulaire et de type "tressée".

8. Pneumatique selon la revendication 7, caractérisé en ce qu'au moins une nappe de liaison est enroulée autour de la tringle (3) en formant deux retournements (4) et (4)' disposés respectivement axialement à l'intérieur du retournement de carcasse (1') et axialement à l'extérieur de la carcasse (1), lesdits retournements ayant des extrémités dont les rayons sont supérieurs au rayon $R_T$ de la tringle (2).

9. Pneumatique selon la revendication 7, caractérisé en ce qu'au moins une nappe de liaison est enroulée autour de la tringle (3) en formant deux retournements (4) et (4'), lesdits retournements étant en partie superposés et disposés axialement à l'extérieur de la carcasse (1) et ayant des extrémités dont les rayons sont supérieurs au rayon $R_T$ de la tringle (2).

10. Pneumatique selon l'une des revendications 8 ou 9, caractérisé en ce que la ou les nappes de liaison sont constituées de fils ou de câbles textiles ou métalliques disposés de façon à faire un angle compris entre 0° et 45° par rapport à l'orientation de l'armature de carcasse.

11. Pneumatique selon l'une quelconque des revendications précédentes, caractérisé en ce que le rapport de forme H/S dudit pneumatique est au plus égal à 0.6.

## Claims

1. A tyre for heavy vehicles, which is intended to be mounted on a rim (J) having two bead seats which are extended axially and radially towards the outside by flanges of radius $R_J$, comprising in each bead (B) at least one bead wire (2) of inner radius $R_T$ around which a radial carcass reinforcement is anchored by turning-up, characterised in that

   (a) the centre of gravity (21) of the meridian section of the bead wire (2) is located radially to the outside of the rim flange,

   (b) the bead wire (2) has a modulus of extension at least equal to 100,000 MPa and its clamping on the rim flange $s = (R_J - R_B)/(R_T - R_B)$ is between 0.1 and 0.9, $R_B$ being the radius of the bead of the unmounted tyre measured in the plane perpendicular to the axis of rotation and passing through the centre of gravity (21) of the cross-section of the bead wire (2).

2. A tyre according to Claim 1, characterised in that the carcass reinforcement (1) is turned up axially towards the inside around the bead wire (2).

3. A tyre according to Claim 2, characterised in that the bead wire (2) has the centre of gravity (21) of its cross-section positioned axially to the inside with respect to the point A of the rim flange furthest radially from the axis of rotation.

4. A tyre according to Claim 3, characterised in that the portion (5) of the bead (B) axially to the inside with respect to the bead wire (2) is extended radially towards the axis of rotation in order to be able to come into contact with a portion of the flange of the rim (J).

5. A tyre according to one of Claims 1 to 4, characterised in that the portion (5) of the bead (B) which is axially to the inside with respect to the bead wire (2) is extended radially until it can come into contact with the seat of the rim (J).

6. A tyre according to Claim 5, characterised in that the portion (5) of the bead (B) which is axially and radially to the inside with respect to the bead wire (2) includes a reinforcement element (3) having a modulus of extension which is at least equal to 4000 MPa.

7. A tyre according to Claim 6, characterised in that the reinforcement element (3) is a bead wire of circular cross-section of "braided" type.

8. A tyre according to Claim 7, characterised in that at least one connecting ply is wound around the bead wire (3), forming two turn-ups (4) and (4') arranged axially to the inside of the carcass turn-up (1') and axially to the outside of the carcass (1), respectively, said turn-ups having ends the radii of which are greater than the radius $R_T$ of the bead wire (2).

9. A tyre according to Claim 7, characterised in that at least one connecting ply is wound around the bead wire (3), forming two turn-ups (4) and (4'), the said turn-ups being in part superimposed and disposed axially to the outside of the carcass (1) and having ends the radii of which are greater than the radius $R_T$ of the bead wire (2).

10. A tyre according to one of Claims 8 or 9, characterised in that the connecting ply or plies are formed of textile or metal cords or cables arranged in such a manner as to form an angle of between 0° and 45° with respect to the orientation of the carcass reinforcement.

11. A tyre according to any one of the preceding claims, characterised in that the form ratio H/S of said tyre is at most equal to 0.6.

**Patentansprüche**

1. Reifen für Schwerfahrzeuge, der zur Montage auf einer Felge (J) bestimmt ist, welche zwei axial und radial nach außen durch Ränder mit dem Radius $R_J$ verlängerte Wulstsitze aufweist, mit mindestens einem Wulstkern (2) in jedem Wulst (B), mit einem Innenradius $R_T$, um welchen durch Umschlagung ein radialer Karkassenmantel (1) verankert ist, dadurch **gekennzeichnet**, daß

   a) der Schwerpunkt (21) des Meridianschnitts des Wulstkernes (2) radial außerhalb des Felgenrandes gelegen ist,
   b) der Wulstkern (2) einen Dehnungsmodul aufweist, der mindestens gleich 100.000 MPa ist und seine Klemmung auf dem Felgenrand $s = (R_J - R_B)/(R_T - R_B)$ zwischen 0,1 und 0,9 liegt, wobei $R_B$ der Radius des Wulstes des nichtmontierten Reifen ist, gemessen in der Ebene senkrecht zur Drehachse, die durch den Schwerpunkt (21) des Querschnitts des Wulstes (2) hindurchläuft.

2. Reifen nach Anspruch 1, dadurch **gekennzeichnet**, daß der Karkassenmantel (1) axial rund um den Wulstkern (2) nach innen geschlagen ist.

3. Reifen nach Anspruch 2, dadurch **gekennzeichnet**, daß der Wulstkern (2) den Schwerpunkt (21) seines Querschnitts axial innerhalb bezüglich des Punktes A des Felgenrandes aufweist, der axial von der Drehachse am weitesten entfernt ist.

4. Reifen nach Anspruch 3, dadurch **gekennzeichnet**, daß der Abschnitt (5) des Wulstes (B), der axial innerhalb bezüglich des Wulstkernes (2) liegt, radial zur Drehachse hin verlängert ist, um mit einem Abschnitt des Randes der Felge (J) in Berührung zu gelangen.

5. Reifen nach einem der Ansprüche 1 bis 4, dadurch **gekennzeichnet**, daß der Abschnitt (5) des Wulstes (B), der axial in bezug auf den Wulstkern (2) innen liegt, radial verlängert ist, bis er in Berührung mit dem Sitz der Felge (J) gelangt.

6. Reifen nach Anspruch 5, dadurch **gekennzeichnet**, daß der Abschnitt (5) des Reifens (B), der in bezug auf den Wulstkern (2) axial und radial innen liegt, ein Verstärkungselement (3) aufweist, dessen Dehnungsmodul mindestens gleich 4.000 MPa ist.

7. Reifen nach Anspruch 6, dadurch **gekennzeichnet**, daß das Verstärkungselement (3) ein Wulstkern mit kreisförmigem Querschnitt und dem Typ nach "geflochten" ist.

8. Reifen nach Anspruch 7, dadurch **gekennzeichnet**, daß mindestens eine Verbindungsauflage rund um den Wulstkern (3) herumgeschlungen ist, wobei sie zwei Umschläge (4) und (4)' bildet, die axial innerhalb des Karkassenumschlags (1') bzw. axial außerhalb der Karkasse (1) angeordnet sind, wobei die genannten Umschläge Enden aufweisen, deren Radien größer sind als der Radius $R_T$ des Wulstkerns (2).

9. Reifen nach Anspruch 7, dadurch **gekennzeichnet**, daß mindestens eine Verbindungsauflage um den Wulstkern (3) herumgeschlungen ist, wobei sie zwei Umschläge (4) und (4') bilden, wobei die genannten Umschläge teilweise Übereinandergelegt sind und axial außerhalb der Karkasse (1) angeordnet sind sowie Enden aufweisen, deren Radien größer sind als der Radius $R_T$ des Wulstkerns (2).

10. Reifen nach einem der Ansprüche 8 oder 9, dadurch **gekennzeichnet**, daß die Verbindungsauflage(n) aus Textil- oder Metalldrähten bzw. -fäden oder -seilen gebildet ist bzw. sind, die so angeordnet sind, daß sie einen Winkel bezüglich der Ausrichtung des Karkassenmantels bilden, der zwischen 0° und 45° liegt.

11. Reifen nach irgendeinem der vorangehenden Ansprüche, dadurch **gekennzeichnet**, daß das Formverhältnis H/S (Höhe/Breite) des genannten Reifens höchstens 0,6 beträgt.

X
H
S
$R_1$
$R_2$
1'
2
21
1
A
B
L
J
K
$R_T$
$R_J$
X'

FIG.1

1'
1
2
21
B
5
$R_B$
$R_T$
FIG. 2
1
1'
4
B
2
21
4'
$R_E$
3
$R_T$
J
5
FIG. 3
1
1'
4'
2
21
B
4
$R_E$
3
5
J
$R_T$
FIG. 4